**Europäisches Patentamt**

**European Patent Office**

**Office européen des brevets**

(11) Veröffentlichungsnummer: **0 436 796 A1**

## (12) EUROPÄISCHE PATENTANMELDUNG

(21) Anmeldenummer: **90121401.5**

(22) Anmeldetag: **08.11.90**

(51) Int. Cl.5: **B65G 59/02**

(30) Priorität: **14.12.89 DE 3941214**

(43) Veröffentlichungstag der Anmeldung:
**17.07.91 Patentblatt 91/29**

(84) Benannte Vertragsstaaten:
**AT BE CH DE DK ES FR GB GR IT LI LU NL SE**

(71) Anmelder: **Hailo-Werk Rudolf Loh GmbH & Co. KG**
**Industriestrasse**
**W-6342 Haiger(DE)**

(72) Erfinder: **Horn, Stefan**
**Budenbergweg 5**
**W-6342 Haiger 1(DE)**

(74) Vertreter: **Vogel, Georg**
**Pat.-Ing. Georg Vogel**
**Hermann-Essig-Strasse 35**
**W-7141 Schwieberdingen(DE)**

(54) **Vorrichtung zum Entstapeln von länglichen Profilabschnitten und Verfahren zum Betreiben der Vorrichtung.**

(57) Die Erfindung betrifft eine Vorrichtung zum Entstapeln von länglichen Profilabschnitten eines Stapels (10) mit einer Schiebeeinrichtung und einer Stützeinrichtung. Eine universelle Verwendung der Vorrichtung für unterschiedlich lange Profilabschnitte bei wenig Platzbedarf wird dadurch erreicht, daß die Schiebeeinrichtung und die Stützeinrichtung als Hubbalkengeräte (13,14) ausgebildet sind, die in Längsrichtung des Stapels (10) im Abstand zueinander verstellbar sind, daß die Profilabschnitte in einem Stapelbehälter (11 abgelegt sind, der zwischen die beiden Hubbalkengeräte (13,14) einbringbar ist, und daß jedes Hubbalkengerät (13,14) einen Hubbalken (17,22) mit einem in Längsrichtung der Profilabschnitte verstellbaren Schieber (25.1, 25.2) und eine quer zur Längsachse der Profilabschnitte verlaufende Fördereinrichtung (18,23) aufweist.

FIG.5

# VORRICHTUNG ZUM ENTSTAPELN VON LÄNGLICHEN PROFILABSCHNITTEN UND VERFAHREN ZUM BETREIBEN DER VORRICHTUNG

Die Erfindung betrifft eine Vorrichtung zum Entstapeln von länglichen Profilabschnitten eines Stapels mit einer auf einer Stirnseite des Stapels angeordneten Schiebeeinrichtung, die vertikal verstellbar ist und mit der nacheinander jeweils ein oben liegender Teil der Profilabschnitte des Stapels auf eine Stützeinrichtung schiebbar ist, die auf der gegenüberliegenden Seite des Stapels angeordnet und ebenfalls vertikal verstellbar ist, bei der die von der Schiebeeinrichtung verschobenen und von der Stützeinrichtung unterstützten Profilabschnitte vom Stapel abhebbar und mittels einer Transporteinrichtung quer zur Längsachse der Profilabschnitte weiterleitbar sind, sowie ein Verfahren zum Betreiben der Vorrichtung.

Eine Vorrichtung dieser Art ist durch die DE-PS 30 15 648 bekannt. Bei dieser Vorrichtung werden die Profilabschnitte in einem lagenweise geschichteten Stapel zugeführt. Dies erfordert aber entsprechend geordnete Stapel von Profilabschnitten, die zum einen teurer sind als ungeordnet zusammengebrachte und -gehaltene Profilabschnitte. Außerdem können nicht jede Profilabschnitte aufgrund ihrer unregelmäßigen Querschnitte in Lagen gestapelt werden.

Bei dieser bekannten Vorrichtung wird die oberste Lage von Profilabschnitten in Längsrichtung auf das Stützelement auf der gegenüberliegenden Seite des Stapels geschoben. Die so verschobenen Profilabschnitte können mit dem Stützelement angehoben werden, so daß quer zur Längsrichtung des Stapels verfahrbare Tragarme die so vorbereitete Lage von Profilabschnitten erfassen kann. Dazu wird das Stützelement an den erfaßten Profilabschnitten entlangbewegt, so daß diese auf ihrer gesamten Länge vom Stapel abgehoben werden, um die Tragarme einführen zu können. Die von den Tragarmen erfaßten Profilabschnitte werden auf eine Fördereinrichtung übergeben, die die Profilabschnitte einzeln in ihrer Längsrichtung weiterleitet. Das Beschicken der Fördereinrichtung, die senkrecht zu den Tragarmen verläuft, erfolgt durch stufenweises Verfahren der Tragarme. Die Tragarme mit ihrem Maschinengestell und ihrem Antrieb belegen mit der Fördereinrichtung neben dem Stapel einen Platz, der größer ist als die auf die Standfläche projizierte Fläche des Stapels, da die Tragarme ja eine Stapellage übernehmen und vereinzeln müssen. Außerdem ist die Vorrichtung sehr kompliziert und aufwendig und nicht schnell und leicht auf unterschiedliche Längen der Profilabschnitte einstellbar.

Es ist Aufgabe der Erfindung, eine Vorrichtung der eingangs erwähnten Art zu schaffen, die einfach im Aufbau ist, auf unterschiedlich lange Profilabschnitte einstellbar ist und ungeordnete Stapel von Profilabschnitten entstapeln kann, sowie ein Verfahren zum Betreiben der Vorrichtung.

Diese Aufgabe wird nach der Erfindung dadurch gelöst, daß die Schiebeeinrichtung und die Stützeinrichtung als Hubbalkengeräte ausgebildet sind, die in Längsrichtung des Stapels im Abstand zueinander verstellbar sind, daß die Profilabschnitte in einem Stapelbehälter abgelegt sind, der zwischen die beiden Hubbalkengeräte einbringbar ist, und daß jedes Hubbalkengerät einen Hubbalken mit einem in Längsrichtung der Profilabschnitte verstellbaren Schieber als Schiebeeinrichtung und ein quer zur Längsachse der Profilabschnitte verlaufende Fördereinrichtung aufweist.

Die Ausbildung der Vorrichtung mit zwei verfahrbaren Hubbalkengeräten hat den Vorteil, daß eine einfache Anpassung an verschiedene Längen von Profilabschnitten möglich ist. Die Hubbalken vereinigen eine Schiebeeinrichtung und eine Fördereinrichtung, so daß die für das Entstapeln erforderlichen Verschiebe-, Hebe- und Förderbewegungen einfach zu steuern sind. Die Vorrichtung erfordert zum Entstapeln nur die beiden Hubbalkengeräte, die an den Stirnseiten des Stapels angeordnet sind, und kann zum Entstapeln eines geordneten und ungeordneten Stapels verwendet werden.

Für die Einstellung der Hubbalken bei den Entstapelungsvorgängen werden einfach dadurch Bezugspunkte geschaffen, daß jeder Hubbalken eine quer zur Längsrichtung des Stapels verlaufende Lichtschranke aufweist, mit der die höchste Kante des Stapels erfaßbar ist. Diese Bezugspunkte wandern mit der fortschreitenden Entstapelung des Stapels.

Die Vertikalverstellung der Hubbalken wird nach einer Ausgestaltung dadurch erhalten, daß die Hubbalken mittels eines elektronisch stufenlos regelbaren elektromotorischen Antriebes in einem Schnellgang und einem Langsamgang an einem vertikalen Rahmen verstellbar sind.

Nach einer Ausgestaltung ist vorgesehen, daß die Schieber zusammen mit den Fördereinrichtungen in Längsrichtung des Stapels verstellbar an dem Hubbalken angebracht sind.

Für die Steuerung der Schieber sieht eine weitere Ausgestaltung vor, daß die Schieber mit den Fördereinrichtungen jeweils mittels einer pneumatischen oder hydraulischen Kolben-Zylinder-Einheit verstellbar sind.

Damit beim Verschieben der Profilabschnitte keine Blockierung auftritt, ist das Verfahren zum Betreiben der Vorrichtung so, daß zu Beginn eines Entstapelvorganges der ei ne Schieber um einen vorgegebenen Betrag gegenüber der obersten Kante des Stapels abgesenkt wird, der nur einem Teil der maximalen Querschnittsabmessung eines Profilabschnittes entspricht, und daß die als Stützeinrichtung verwendete Fördereinrichtung auf der gegenüberliegenden Stirnseite des Stapels auf eine Höhe eingestellt wird, die um den vorgegebenen Betrag plus der maximalen Querschnittsabmessung unter der höchsten Kante des Stapels liegt.

Der weitere Ablauf der Entstapelung ist nach dem Verfahren so festgelegt, daß für weitere Entstapelungsvorgänge der eine Schieber und die gegenüberliegende Fördereinrichtung jeweils um die maximale Querschnittsabmessung eines Profilabschnittes abgesenkt werden.

Das Verfahren des Entstapelungsvorganges wird dadurch vervollständigt, daß die von der Fördereinrichtung erfaßten Profilabschnitte durch eine Verstellung des zugeordneten Hubbalkens vom Stapel abgehoben und mittels des zugeordneten Schiebers auf die Fördereinrichtung der entgegengesetzten Seite zurückgeschoben werden, die vorher aus der Ausgangsstellung zu Beginn des Entstapelungsvorganges um die maximale Querschnittsabmessung eines Profilstranges abgesenkt worden ist, sowie daß die von den Fördereinrichtungen getragenen Profilabschnitte in die höchste Stellung der Hubbalkengeräte angehoben und durch die Fördereinrichtungen auf eine seitlich des Stapels angeordnete Rutsche oder Fördereinrichtung weitergeleitet werden.

Die Vorrichtung kann nach einer Abwandlung auch so ausgelegt sein, daß jedem Schieber und jeder Fördereinrichtung eine individuelle Stelleinrichtung zugeordnet ist und daß die Fördereinrichtungen jeweils unterhalb des zugeordneten Schiebers auf dem Hubbalken angeordnet sind.

Das Verfahren zum Betreiben dieser Vorrichtung ist dann dadurch gekennzeichnet, daß zu Beginn eines Entstapelungsvorganges die Schieber durch ihre Stelleinrichtungen in eine Ausgangsstellung außerhalb des Stapels eingestellt werden, daß die Hubbalken und damit die Schieber durch die Antriebe der Hubbalkengeräte in eine Greifstellung zum Stapel eingestellt werden, in der jeweils die obersten Profilabschnitte des Stapels festlegbar sind, daß die Schieber durch ihre Stelleinrichtungen gleichzeitig oder nacheinander an den Stapel herangeführt werden, um mit Halteplatten die in Greifstellung befindlichen Profilabschnitte stirnseitig zu fassen, daß die gefaßten Profilabschnitte durch Anheben der Hubbalken vom Stapel abgehoben werden, daß die Fördereinrichtungen durch ihre Stelleinrichtungen unter die Schieber verstellt werden, daß die Schieber durch ihre Stelleinrichtungen in die Ausgangsstellung zurückgestellt werden, wobei die abgehobenen Profilabschnitte auf die darunter bereitstehenden Fördereinrichtungen abgegeben werden, daß durch die Fördereinrichtungen die erhaltenen Profilabschnitte seitlich abtransportiert werden und daß nach der Entleerung die Fördereinrichtungen durch ihre Stelleinrichtungen in ihre Ausgangsstellung zurückgestellt werden. Dabei ist wieder zur störungsfreien, vereinzelten Weiterleitung der Profilabschnitte vorgesehen, daß die Hubbalken beim Abheben vom Stapel jeweils in die höchste Stellung der Hubbalkengeräte hochgefahren werden, in der die Fördereinrichtungen an die weiterführende Rutsche oder Fördereinrichtung anschließen.

Da die Profilabschnitte in der Regel aus einem Profilstrang abgelängt sind, ergeben sich an den Stirnseiten mehr oder weniger starke Grate, die ein axiales Verstellen der Profilabschnitte beim Fassen durch die Schieber stark behindern können, was zu einem unsicheren Fassen und Abheben der Profilabschnitte und damit zur Störung beim Betreiben der Vorrichtung führen kann. Um dies zu vermeiden, sieht eine weitere Ausgestaltung der Vorrichtung vor, daß die Schieber in Halteplatten auslaufen, die auf den dem Stapel zugekehrten Seiten mit einem elastischen Belag, z.B. aus Gummi, elastischem Kunststoff oder dgl., abgeschlossen sind.

Der elastische Belag läßt einen Längenausgleich zu, da sich die Profilabschnitte mit ihren Stirnseiten unterschiedlich tief in diesem Belag eindrücken können. Es hat sich gezeigt, daß allein durch diese Maßnahme ein sicheres Fassen und Abheben auch von Profilabschnitten mit mehr oder weniger starken Graten an den Stirnseiten erreichen läßt.

Ist dazu noch vorgesehen, daß der Belag auswechselbar an einer starren Grundplatte befestigt ist, dann können diese dem Verschleiß unterliegenden Teile der Schieber schnell ausgetauscht und durch neue Beläge ersetzt werden.

Die Erfindung wird anhand eines in den Zeichnungen dargestellten Ausführungsbeispiels näher erläutert. Es zeigt:

Fig. 1      eine Entstapelungs-Vorrichtung nach der Erfindung in Seitenansicht mit gemeinsamer Verstellung von Schieber und Fördereinrichtung,

Fig. 2 bis 6      schematisch die einzelnen Stufen eines Entstapelungs-Vorganges in vereinfachter Seitenansicht, und

Fig. 7      in schematischer Darstellung eine Entstapelungs-Vorrichtung nach der Erfindung mit individueller Verstellung von Schieber und Fördereinrichtung.

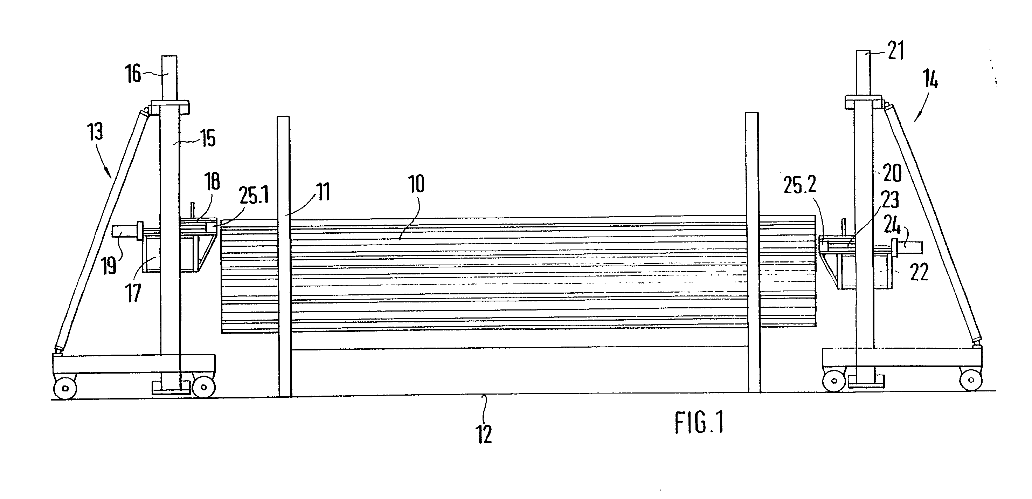

Wie die Fig. 1 zeigt, besteht die Vorrichtung aus den beiden Hubbalkengeräten 13 und 14, die auf der Führungsbahn 12 gegeneinander verstellbar sind. Die Hubbalkengeräte 13 und 14 werden an die Stirnseiten des Stapels 10 herangefahren und können auf einer Führungsbahn 12 arretiert werden. Auf diese Weise kann die Vorrichtung schnell und leicht an unterschiedliche Längen der im Stapel 10 ungeordnet oder geordnet abgelegten Profilabschnitte angepaßt werden. Die Profilabschnitte sind in dem Behälter 11 untergebracht, der zwischen die Hubbalkengeräte 13 und 14 eingefahren und arretiert wird. Die Enden der Profilabschnitte stehen dabei etwa 200 mm aus dem Behälter vor, der eine einfache Rahmenkonstruktion sein kann.

Die Hubbalkengeräte 13 und 14 haben jeweils einen Hubbalken 17 bzw. 22, der z.B. über eine Spindel und einen in der Drehzahl elektronisch stufenlos regelbaren Elektromotor angetrieben wird, wie die Antriebe 16 und 21 andeuten.

Jeder Hubbalken 17 bzw. 22 weist einen Schieber 25.1 bzw. 25.2 mit einer Fördereinrichtung 18 bzw. 22 auf, der von einer pneumatischen oder hydraulischen Kolben-Zylinder-Einheit 19 bzw. 24 gesteuert wird, so daß in Längsrichtung des Stapels 10 jeweils der Schieber 25.1 bzw. 25.2 mit der zugeordneten Fördereinrichtung 18 bzw. 23 gemeinsam verstellt werden. Mit dem Schieber 25.1 bzw. 25.2 kann ein Teil der oben im Stapel 10 liegenden Profilabschnitte in der Längsrichtung verschoben werden. Die Förderrichtung der Fördereinrichtung 18 bzw. 23 ist quer zur Längsrichtung des Stapels 10 ausgerichtet.

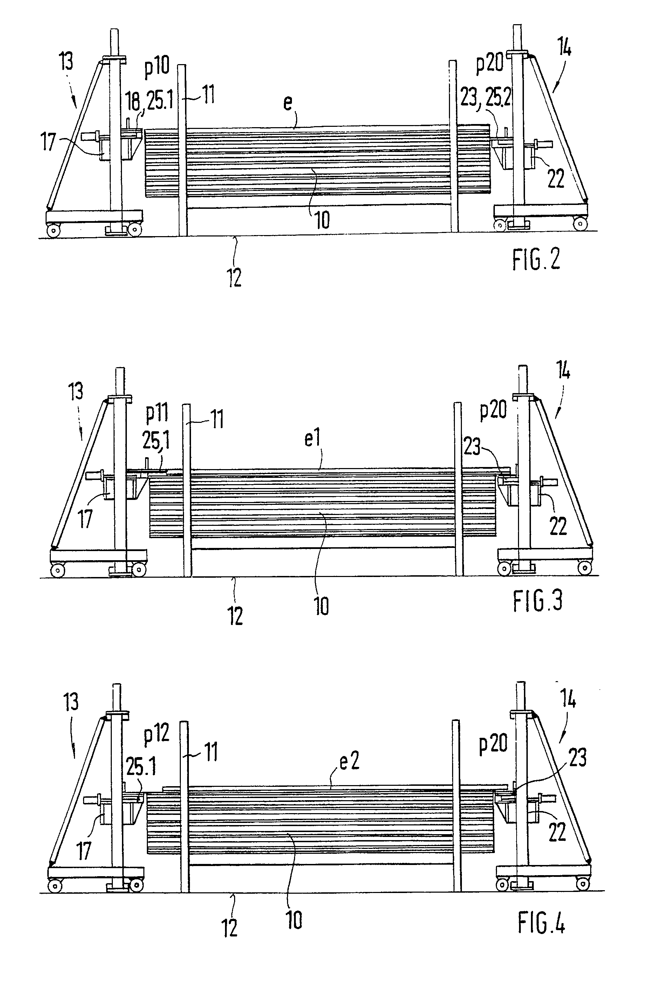

Anhand der Fig. 2 bis 6 wird die Arbeitsweise der Vorrichtung näher erläutert.

In der Ausgangsruhestellung sind die beiden Hubbalkengeräte 13 und 14 in ihren Endstellungen, d.h. sie nehmen den maximalen Abstand ein. Die Hubbalken 17 und 22 sind an den vertikalen Rahmen 15 und 20 in die oberste Stellung gebracht. Die Schieber 25.1 und 25.2 mit den Fördereinrichtungen 18 und 23 sind zurückgezogen, d.h. nehmen die dem Stapel 10 abgekehrten Endstellungen ein. In dieser Ausgangsruhestellung wird der Behälter 11 mit den ungeordnet oder geordnet abgelegten Profilabschnitten zwischen die Hubbalkengeräte 13 und 14 eingefahren und arretiert. Die Hubbalkengeräte 13 und 14 werden an die Stirnseiten des Stapels 10 herangefahren und arretiert. Die Vorrichtung befindet sich dann in der Ausgangsstellung für den automatisch ablaufenden Entstapelungs-Vorgang, der manuell eingeleitet wird.

Mit der Inbetriebnahme der Vorrichtung fahren die Hubbalken 17 und 22 im Schnellgang an den Rahmen 15 und 20 herab. Jeder Hubbalken 17 und 22 trägt eine quer zur Längsrichtung des Stapels 10 gerichtete Lichtschranke, mit der die oberste Kante des Stapels 10 erfaßt wird. Damit wird auf den Langsamgang der Antriebe 16 und 21 umgeschaltet und mit Drehimpulsgebern die weitere Verstellung der Hubbalken 17 und 22 erfaßt und ausgewertet. Der Hubbalken 17 fährt soweit nach unten, bis er einen vorgegebenen Betrag unterhalb der obersten Kante des Stapels 10 steht, der nur einen Teil der maximalen Querschnittsabmessung eines Profilabschnittes beträgt. Der Hubbalken 22 wird jedoch noch weiter abgesenkt und zwar um einen Weg, der durch die Summe aus diesem vorgegebenen Betrag und der maximalen Querschnittsabmessung eines Profilabschnittes gegeben ist. Diese Stellungen sind in Fig. 2 mit p10 und p20 bezeichnet . Damit ist die Vorrichtung zum Entstapeln eines Teils e von Profilabschnitten eingestellt, der am Stapel 10 oben liegt.

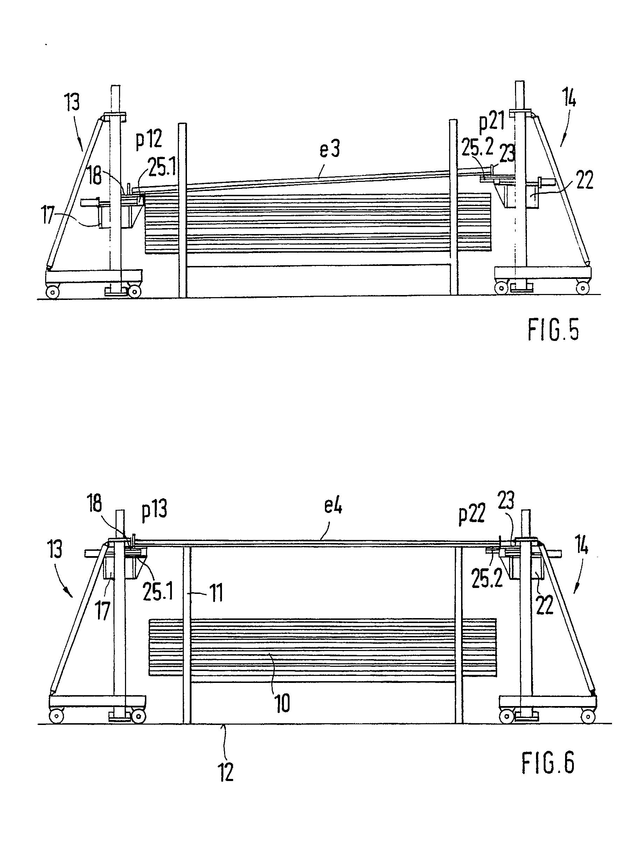

Wie Fig. 3 zeigt, wird dann mit dem Schieber 25.1 und der Fördereinrichtung 18 des Hubbalkens 17 der Teil e der Profilabschnitte verschoben. Die Stellung p11 zeigt die ausgefahrene Stellung von Schieber 25.1 und Fördereinrichtung 18 an. Beim Hubbalken 22 werden die verschobenen Profilabschnitte e1 auf die noch in der eingezogenen Ausgangsstellung befindliche Fördereinrichtung 23 geschoben, wie die Stellung p20 zeigt. Im folgenden Takt des Entstapelungs-Vorganges wird der Hubbalken 17 um einen Betrag abgesenkt, der durch die maximale Querschnittsabmessung der Profilabschnitte gegeben ist. Der Hubbalken 17 nimmt die in Fig. 4 gezeigte Position p12 ein, in der auch der Schieber 25.1 mit der Fördereinrichtung 18 wieder in die Ausgangsstellung eingezogen ist. Der Hubbalken 22 des Hubbalkengerätes 14 wird in die Stellung p21 hochgefahren und der Schieber 25.2 mit der Fördereinrichtung 23 schiebt die Profilabschnitte e3 auf die Fördereinrichtung 25.1 des Hubbalkens 17, die die eingezogene Position p12 einnimmt, wie Fig. 5 zeigt. Dann wird der Hubbalken 17 im Langsamgang auf gleiche Höhe mit dem Hubbalken 22 gebracht. Schließlich werden die Profilabschnitte e4 in die obersten Stellungen p13 und p22 gebracht, wobei die Verstellung im Langsamgang anfängt und über den Schnellgang wieder im Langsamgang ausläuft. Haben die Profilabschnitte e4 die Stellung nach Fig. 6 erreicht, dann werden die Fördereinrichtungen 18 und 23 eingeschaltet, die die Profilabschnitte e4 auf eine seitlich des Stapels 10 angeordnete, nicht dargestellte Rutsche oder Fördereinrichtung weiterleiten, über die sie in den Materialpuffer der Verarbeitungsmaschine gelangen. Erkennen die Lichtschranken, daß die Profilabschnitte e4 die Fördereinrichtungen 18 und 23 verlassen haben, dann wird auch der Schieber 25.2 mit der Fördereinrichtung 23 in die eingezogene Stellung zurückgestellt. Die Vorrichtung nimmt dann die Ausgangsruhestellung für einen neuen Entstapelungs-Vorgang ein.

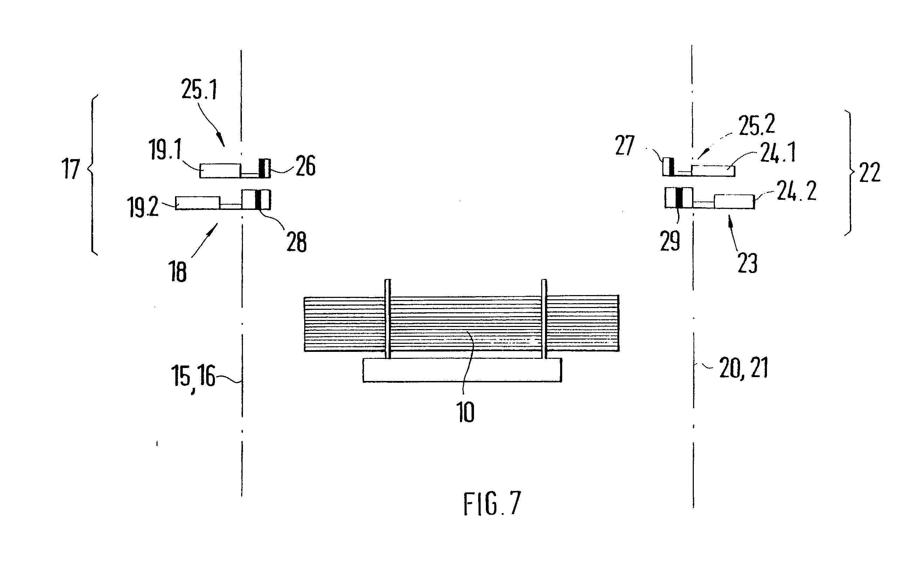

Eine Abwandlung der Entstapelungs-Vorrichtung nach der Erfindung und das dazugehörige Verfahren zum Betreiben der Vorrichtung ist in Fig. 7 schematisch dargestellt. Die vertikalen Rahmen 15 und 20 der Hubbalkengeräte 13 und 14 und ihre Antriebe 16 und 21 sind schematisch durch die vertikalen, strichpunktierten Linien angegeben. An den Rahmen 15 und 20 sind die Hubbalken 17 und 22 vertikal verstellbar.

Der Hubbalken 17 trägt den Schieber 25.1 und die Fördereinrichtung 18, während der Hubbalken 22 den Schieber 25.2 und die Fördereinrichtung 23 trägt. Die Schieber 25. 1 und 25.2 sind jeweils in einem kleinen Abstand über den Fördereinrichtungen 18 und 23 angeordnet. Als Fördereinrichtungen 18 und 23 können Endlos-Förderbänder 28 und 29 verwendet werden, die sich über mehr als die Breite des Stapels 10 erstrecken. Die Schieber 25.1 und 25.2 enden dem Stapel 10 zugekehrt in Halteplatten 26 und 27, deren Höhe nur geringfügig größer sein muß als die Greifhöhe am Stapel 10. In der Zeichnung sind sie wesentlich höher dargestellt, um zu zeigen, daß ihre dem Stapel 10 zugekehrten Seiten mit einem elastischen Belag versehen sind. Diese Beläge können aus Gummi oder einem elastischen Kunststoff bestehen und sind vorzugsweise austauschbar an starren Grundplatten befestigt, die mittels der individuell zugeordneten Stelleinrichtungen 19.1 und 19.2 verstellt werden können. Damit wird erreicht, daß sich die Stirnseiten mehr oder weniger in die Halteplatten 26 und 27 eindrücken können, was bei mit Graten versehenen Stirnseiten der Profilabschnitte sehr wichtig ist, um ein eindeutiges und sicheres Fassen und Halten der von den Halteplatten 26 und 27 aufgenommenen Profilabschnitte zu gewährleisten.

Den Fördereinrichtungen 18 und 23 sind ebenfalls individuelle Stelleinrichtungen 19.2 und 24.2 zugeordnet, so daß sie unabhängig von den Schiebern 25.1 und 25.2 verstellt werden können.

In der schematisch dargestellten Ausgangsstellung befinden sich die Schieber 25.1 und 25.2 sowie die Fördereinrichtungen 18 und 23 in der höchsten Stellung der Hubbalken 17 und 22 an den Rahmen 15 und 20 der Hubbalkengeräte. In dieser Ausgangsstellung befinden sich die Fördereinrichtungen 18 und 23 mit ihren Förderbändern 28 und 29 im Anschluß an die weiterführende Rutsche oder Fördereinrichtung. Außerdem stehen die Schieber 25.1 und 25.2 sowie die Fördereinrichtungen 18 und 23 außerhalb des Stapels 10.

Zum Betreiben dieser Vorrichtung werden die Hubbalken 17 und 22 soweit abgesenkt, daß die Halteplatten 26 und 27 den Stapel 10 um die vorgegebene Greifhöhe überlappen, die vom Querschnitt der ungeordnet gestapelten Profilabschnitte abhängt und nur einen Teil der Querschnittsabmessung umfaßt. Dann werden durch die Stelleinrichtungen 19.1 und 24.1 die Schieber 25.1 und 25.2 gleichzeitig oder nacheinander an den Stapel 10 herangeführt, bis die Halteplatten 26 und 27 die im Bereich der Greifhöhe liegenden Profilabschnitte fassen. Die elastischen Beläge der Halteplatten 26 und 27 lassen dabei eine unterschiedliche Eindringtiefe für die Profilabschnitte zu, da infolge der Grate die Profilabschnitte der Greifhöhe nicht unbedingt in einer gemeinsamen Ebene liegen und auch axial nicht ausgerichtet werden können. Beim Fassen der Profilabschnitte durch die Halteplatten 26 und 27 der Schieber 25.1 und 25.2 behalten die Fördereinrichtungen 18 und 23 ihre Ausgangsstellung bei. Durch Anheben der Hubbalken 17 und 22 werden die gefaßten Profilabschnitte vom Stapel 10 abgehoben. Die Hubbalken 17 und 22 werden wieder in die höchste Stellung gebracht, so daß die Fördereinrichtungen 18 und 23 ihre Entladestellung einnehmen. Vorher wurden die Fördereinrichtungen 18 und 23 jedoch durch die Stelleinrichtungen 19.2 und 24.2 unter die ausgefahrenen Schieber 25.1 und 25.2 gebracht. Danach werden die Schieber 25.1 und 25.2 in die Ausgangsstellung zurückgestellt. Dabei geben die Halteplatten 26 und 27 die Profilabschnitte frei, so daß sie mit ihren Endabschnitten auf den Endlos-Förderbändern 28 und 29 der Fördereinrichtungen 18 und 23 liegen. Werden die Endlos-Förderbänder 28 und 29 in Betrieb gesetzt, dann werden die Profilabschnitte quer zu ihrer Längsrichtung weitergeleitet. Die Inbetriebnahme der Endlos-Förderbänder 28 und 29 kann dabei von einem Anforderungssignal der weiterführenden Fördereinrichtung oder einer Weiterbearbeitungsstation abhängig sein. Sind alle auf die Fördereinrichtungen 18 und 23 abgelegten Profilabschnitte weitergeleitet, dann stellen die Stelleinrichtungen 19.2 und 24.2 auch die Fördereinrichtungen 18 und 23 wieder in ihre Ausgangsstellung zurück, so daß ein neuer Entstapelungszyklus eingeleitet werden kann, bei dem die Hubbalken 17 und 22 wieder so weit abgesenkt werden, bis sie den Stapel 10 mit den Halteplatten 26 und 27 der Schieber 25.1 und 25.2 um die Greifhöhe überlappen.

## Patentansprüche

1. Vorrichtung zum Entstapeln von länglichen Profilabschnitten eines Stapels mit einer auf einer Stirnseite des Stapels angeordneten Schiebeeinrichtung, die vertikal verstellbar ist und mit der nacheinander jeweils ein oben liegender Teil der Profilabschnitte des Stapels auf eine Stützeinrichtung schiebbar ist, die auf der gegenüberliegenden Seite des Stapels angeordnet und ebenfalls vertikal verstellbar ist, bei der die von der Schiebeeinrichtung verschobenen und von der Stützeinrichtung unterstützten Profilabschnitte vom Stapel abhebbar und mittels einer Transporteinrichtung quer zur Längsachse der Profilabschnitte weiterleitbar sind,
dadurch gekennzeichnet,
daß die Schiebeeinrichtung und die Stützeinrichtung als Hubbalkengeräte (13,14) ausgebildet sind, die in Längsrichtung des Stapels (10) im Abstand zueinander verstellbar sind,
daß die Profilabschnitte in einem Stapelbehälter (11) abgelegt sind, der zwischen die beiden Hubbalkengeräte (13,14) einbringbar ist, und
daß jedes Hubbalkengerät einen Hubbalken (17,22) mit einem in Längsrichtung der Profilabschnitte verstellbaren Schieber (25.1; 25.2) und eine quer zur Längsachse der Profilabschnitte verlaufende Fördereinrichtung (18,23) aufweist.

2. Vorrichtung nach Anspruch 1,
dadurch gekennzeichnet,
daß jeder Hubbalken (17,22) eine quer zur Längsrichtung des Stapels (10) verlaufende Lichtschranke aufweist, mit der die höchste Kante des Stapels (10) erfaßbar ist.

3. Vorrichtung nach Anspruch 1 oder 2,
dadurch gekennzeichnet,
daß die Hubbalken (17,22) mittels eines elektronisch, stufenlos regelbaren elektromotorischen Antriebes (16,21) in einem Schnellgang und einem Langsamgang an einem vertikalen Rahmen (15,20) verstellbar sind.

4. Vorrichtung nach einem der Ansprüche 1 bis 3,
dadurch gekennzeichnet,
daß die Schieber (25.1; 25.2) zusammen mit den Fördereinrichtungen (18,23) in Längsrichtung des Stapels (10) verstellbar an dem Hubbalken (17,22) angebracht sind.

5. Vorrichtung nach einem der Ansprüche 1 bis 4,
dadurch gekennzeichnet,
daß die Schieber (25.1; 25.2) mit den Fördereinrichtungen (18,23) jeweils mittels einer pneumatischen oder hydraulischen Kolben-Zylinder-Einheit (19,24) verstellbar sind.

6. Vorrichtung nach Anspruch 1,
dadurch gekennzeichnet,
daß jedem Schieber (25.1; 25.2) und jeder Fördereinrichtung (18,23) eine individuelle Stelleinrichtung (19.1; 24.1; 19.2; 24.2) zugeordnet ist und
daß die Fördereinrichtungen (18,23) jeweils unterhalb des zugeordneten Schiebers (25.1; 25.2) auf dem Hubbalken (17,22) angeordnet sind.

7. Vorrichtung nach einem der Ansprüche 1 bis 6,
dadurch gekennzeichnet,
daß die Schieber (19,24, 19.1,24.1, 19.2,24.2) in Halteplatten (26,27) auslaufen, die auf den dem Stapel (10) zugekehrten Seiten mit einem elastischen Belag, z.B. aus Gummi, elastischem Kunststoff oder dgl., abgeschlossen sind.

8. Vorrichtung nach Anspruch 7,
dadurch gekennzeichnet,
daß der Belag auswechselbar an einer starren Grundpaltte befestigt ist.

9. Verfahren zum Betreiben einer Vorrichtung nach einem der Ansprüche 1 bis 5,
dadurch gekennzeichnet,
daß zu Beginn eines Entstapelvorganges der eine Schieber (25.1) um einen vorgegebenen Betrag gegenüber der obersten Kante des Stapels (10) abgesenkt wird, der nur einem Teil der maximalen Querschnittsabmessung eines Profilabschnittes entspricht, und
daß die als Stützeinrichtung verwendete Fördereinrichtung (23) auf der gegenüberliegenden Stirnseite des Stapels (10) auf eine Höhe eingestellt wird, die um den vorgegebenen Betrag plus der maximalen Querschnittsabmessung unter der höchsten Kante des Stapels (10) liegt (Fig. 2).

10. Verfahren nach Anspruch 9,
dadurch gekennzeichnet,
daß für weitere Entstapelungsvorgänge der eine Schieber (25.1) und die gegenüberliegende Fördereinrichtung (23) jeweils um die maximale Querschnittsabmessung eines Profilabschnittes abgesenkt wird.

11. Verfahren nach Anspruch 9 oder 10,
dadurch gekennzeichnet,
daß die von der Fördereinrichtung (23) erfaßten Profilabschnitte (e2) durch eine Verstellung des zugeordneten Hubbalkens (22) vom Stapel (10) abgehoben und mittels des zugeordneten Schiebers (25.2) auf die Fördereinrichtung (18) der entgegengesetzten Seite zurückgeschoben werden, die vorher aus der Ausgangsstellung zu Beginn des Entstapelungsvorganges um die maximale Querschnittsabmessung eines Profilstranges abgesenkt worden ist (Fig. 4 und 5).

12. Verfahren nach einem der Ansprüche 9 bis 11,
dadurch gekennzeichnet,
daß die von den Fördereinrichtungen (18,23) getragenen Profilabschnitte (e3, e4) in die höchste Stellung der Hubbalkengeräte (13,14) angehoben und durch die Fördereinrichtungen (18,23) auf eine seitlich des Stapels (10) angeordnete Rutsche oder Fördereinrichtung weitergeleitet werden.

13. Verfahren zum Betreiben der Vorrichtung nach Anspruch 1 und 6, dadurch gekennzeichnet, daß zu Beginn eines Entstapelungsvorganges die Schieber (25.1, 25.2) durch ihre Stelleinrichtungen (19.1, 24.1) in eine Ausgangsstellung außerhalb des Stapels (10) eingestellt werden, daß die Hubbalken (17,22) und damit die Schieber (25.1, 25.2) durch die Antriebe (16,21) der Hubbalkengeräte (13,14) in eine Greifstellung zum Stapel (10) eingestellt werden, in der jeweils die obersten Profilabschnitte des Stapels (10) faßbar sind, daß die Schieber (25.1, 25.2) durch ihre Stelleinrichtungen (19.1, 24.1) gleichzeitig oder nacheinander an den Stapel (10) herangeführt werden, um mit Halteplatten (26,27) die in Greifstellung befindlichen Profilabschnitte stirnseitig zu fassen, daß die gefaßten Profilabschnitte durch Anheben der Hubbalken (17,22) vom Stapel (10) abgehoben werden, daß die Fördereinrichtungen (18,23) durch ihre Stelleinrichtungen (19.2, 24.2) unter die Schieber (25.1, 25.2) verstellt werden, daß die Schieber (25.1, 25.2) durch ihre Stelleinrichtungen (19.2, 24.1) in die Ausgangsstellung zurückgestellt werden, wobei die abgehobenen Profilabschnitte auf die darunter bereitstehenden Fördereinrichtungen (18,23) abgegeben werden, daß durch die Fördereinrichtungen (18,23) die erhaltenen Profilabschnitte seitlich abtransportiert werden, und daß nach der Entleerung die Fördereinrichtungen (18,23) durch ihre Stelleinrichtungen (19.2, 24.2) in ihre Ausgangsstellung zurückgestellt werden.

14. Verfahren nach Anspruch 13, dadurch gekennzeichnet, daß die Hubbalken (17,22) beim Abheben vom Stapel (10) jeweils in die höchste Stellung der Hubbalkengeräte (13,14) hochgefahren werden, in der die Fördereinrichtungen (18,23) an die weiterführende Rutsche oder Fördereinrichtung anschließen.

FIG.1

FIG.2

FIG.3

FIG.4

9

FIG.5

FIG.6

EP 0 436 796 A1

17 { 25.1

19.1

26

19.2

28

18

15,16

25.2

27 24.1

24.2

22

29

23

20, 21

10

FIG. 7

Europäisches
Patentamt

**EUROPÄISCHER
RECHERCHENBERICHT**

Nummer der Anmeldung

**EP 90 12 1401**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-2 672 244   (R.J. VAN SCHIE)<br>* Spalte 2, Zeile 3 - Spalte 3, Zeile 64; Fig. *<br>– – – | 1,4-6,<br>9-11 | B 65 G 59/02 |
| A | US-A-4 453 873   (E. CURTI)<br>* Zusammenfassung; Fig. *<br>– – – | 1,4,12 | |
| A | DE-A-2 443 842   (POHLIG-HECKEL-BLEICHERT)<br>* Ansprüche 1,3; Fig. *<br>– – – | 1,2,4 | |
| P,X | DE-U-8 914 656   (HAILO-WERK RUDOLF LOH)<br>* Als ganzes *<br>– – – – – | 1-14 | |

RECHERCHIERTE
SACHGEBIETE (Int. Cl.5)

B 65 G

Der vorliegende Recherchenbericht wurde für alle Patentansprüche erstellt

| Recherchenort | Abschlußdatum der Recherche | Prüfer |
|---|---|---|
| Den Haag | 19 März 91 | VAN ROLLEGHEM F.M. |